# EUROPÄISCHE PATENTSCHRIFT

(11) **EP 4 180 774 B1**
(45) Veröffentlichungstag und Bekanntmachung des Hinweises auf die Patenterteilung: **13.09.2023**
(21) Anmeldenummer: 21208394.3
(22) Anmeldetag: 16.11.2021
(51) Int. Cl.: G01D 5/24

(54) **MULTITURN-DREHGEBER**
MULTI-TURN ROTARY ENCODER
CAPTEUR DE ROTATION MULTITOUR

(43) Veröffentlichungstag der Anmeldung: 17.05.2023
(73) Patentinhaber: SICK AG, 79183 Waldkirch (DE)
(72) Erfinder: Tabler, Eduard, 78050 Villingen-Schwenningen (DE); Gao, Rick, Singapur (SG)
(74) Vertreter: Manitz Finsterwald Patent- und Rechtsanwaltspartnerschaft mbB

(56) Entgegenhaltungen:
- EP-A1- 2 469 239
- EP-B1- 3 385 678
- DE-A1- 10 310 970
- GB-A- 2 527 819

## Beschreibung

Die vorliegende Erfindung betrifft einen Multiturn-Drehgeber mit einer drehbaren Eingangswelle und einer mehrstufigen Encoder-Anordnung zum Erzeugen eines Umdrehungsanzahl-Signals, wobei eine erste Stufe der Encoder-Anordnung einen Winkel-Codeträger umfasst, der über ein Getriebe von der drehbaren Eingangswelle antreibbar ist, wobei ein Sensor der ersten Stufe dazu ausgebildet ist, eine Winkelstellung des Winkel-Codeträgers zu erfassen.

Solche Multiturn-Drehgeber werden dazu eingesetzt, die Anzahl der Umdrehungen eines rotierenden Bauteils, wie zum Beispiel einer Motorwelle oder eines Werkzeugs, zu ermitteln. Aufgrund der mehrstufigen Ausgestaltung der Encoder-Anordnung ist eine hohe Codierungsauflösung möglich, welche das Ermitteln hoher Umdrehungsanzahlen, gegebenenfalls auch bei hohen Drehzahlen, gestattet. Das Getriebe dient hierbei ebenso wie gegebenenfalls vorgesehene Getriebe weiterer Stufen dazu, den Zählbereich zu erweitern. Beispielsweise kann die erste Stufe der Encoder-Anordnung ganze Umdrehungen zählen, während die nachgeordneten Stufen der Encoder-Anordnung jeweils entsprechende Vielfache zählen. Hierfür können die einzelnen Stufen über jeweilige Getriebe mit entsprechend gewählten Übersetzungsverhältnissen gekoppelt sein. Derartige Stufen der Encoder-Anordnung werden auch als "Multiturnstufen" bezeichnet.

Oftmals ist direkt an der Eingangswelle, also noch vor der ersten Stufe der Encoder-Anordnung, ein weiterer von einem Sensor ablesbarer Winkel-Codeträger oder eine Maßverkörperung vorgesehen, der nicht zu einer Multiturnstufe gehört, sondern zu einer Singleturnstufe, wobei die Winkelstellung des weiteren Winkel-Codeträgers direkt die Winkelstellung der Eingangswelle wiedergibt. Ein entsprechender Drehgeber ist in der Lage, die aktuelle Drehstellung der Eingangswelle und zusätzlich die Anzahl der vollzogenen Umdrehungen der Eingangswelle auszugeben. Ein Multiturn-Drehgeber mit einer Singleturnstufe und mehreren Multiturnstufen ist beispielsweise in der EP 2 469 239 A1 offenbart.

Die GB 2 527 819 A offenbart einen Drehgeber, der zum Messen der Spindelstellung in einer Auftriebshilfe für ein Flugzeug vorgesehen ist und zwei Nonius-Zahnräder mit magnetischen Codes aufweist.

Die DE 103 10 970 A1 offenbart einen Drehgeber, bei dem zwei verschiedene magnetische Träger über unterschiedliche Übersetzungen mit der Eingangswelle gekoppelt sind.

In der EP 3 385 678 B1 ist ein Drehgeber mit zwei angetriebenen Codescheiben offenbart, die durch ein Differenzzahngetriebe gekuppelt sind.

Gängige Encoder-Anordnungen benötigen wegen der üblicherweise gewünschten Übersetzungsverhältnisse des Getriebes oder der Getriebe relativ viele Zahnräder, was mit hohen Herstellungs- und Montagekosten verbunden ist. Ein weiteres Problem besteht darin, dass für eine Synchronisation des Multiturn-Drehgebers das Gesamt-Getriebespiel zu ermitteln ist und hierfür alle Zahnräder mindestens einmal um die eigene Achse in eine Richtung und anschließend wieder mindestens einmal um die eigene Achse in die andere Richtung gedreht werden müssen. Dieser Vorgang benötigt in der Praxis eine beträchtliche Zeitdauer.

Es ist eine Aufgabe der Erfindung, einen Multiturn-Drehgeber anzugeben, der einfach und günstig herzustellen und zu montieren ist, nur wenig Bauraum benötigt und für die Synchronisation nur wenig Zeit benötigt.

Die Lösung der Aufgabe erfolgt durch einen Multiturn-Drehgeber mit den Merkmalen des Anspruchs 1.

Die Erfindung sieht vor, dass eine zweite Stufe der Encoder-Anordnung ein einem ersten Getriebe nachgeschaltetes zweites Getriebe umfasst, das zwei ineinandergreifende Nonius-Zahnräder aufweist, deren Zähnezahlen sich um einen Differenzbetrag unterscheiden und die mit jeweiligen Nonius-Codeträgern versehen sind, wobei ein Sensor der zweiten Stufe dazu ausgebildet ist, einen relativen Winkelversatz der Nonius-Codeträger zu erfassen, und wobei eine elektronische Auswerteeinrichtung der Encoder-Anordnung dazu ausgebildet ist, unter Berücksichtigung der erfassten Winkelstellung des Winkel-Codeträgers und des erfassten relativen Winkelversatzes der Nonius-Codeträger eine Umdrehungsanzahl der Eingangswelle zu ermitteln.

Eine Ablesung der Codierung nach dem Nonius-Prinzip ermöglicht das Zählen von Umdrehungs-Vielfachen mittels lediglich zweier Zahnräder. Im Vergleich zu einem herkömmlichen Untersetzungsgetriebe mit direkter Ablesung des Winkel-Codeträgers am letzten Zahnrad sind zwei Nonius-Zahnräder platzsparend und einfach zu montieren. Zudem kann durch die Einsparung zusätzlicher Zahnräder das Getriebespiel verringert werden. Das Getriebespiel des zweiten Getriebes ist im Übrigen besonders schnell zu ermitteln, weil eine vollständige Umdrehung des ausgehenden Nonius-Zahnrads im Wesentlichen durch eine einzige Umdrehung des eingehenden Nonius-Zahnrads zu bewerkstelligen ist. Bei einem herkömmlichen Untersetzungsgetriebe muss das eingehende Zahnrad hingegen entsprechend der Untersetzung mehrmals um die eigene Achse rotiert werden, um eine einzelne vollständige Umdrehung des letzten Zahnrads herbeizuführen.

Ein Vorteil der Erfindung besteht darin, dass die Nonius-Zahnräder des zweiten Getriebes selbst bei hoher Drehzahl der Eingangswelle nicht übermäßig schnell laufen müssen, weil die Drehbewegung der Eingangswelle von dem vorgeschalteten ersten Getriebe und gegebenenfalls von weiteren zwischengeschalteten Getrieben bereits untersetzt sein kann. Somit ist kein übermäßiger Verschleiß der Nonius-Zahnräder zu befürchten.

Um Probleme durch Verschleiß von Nonius-Zahnrädern zu vermeiden, ist es bevorzugt, dass das erste Getriebe keine Nonius-Zahnräder aufweist. Insbesondere kann die erste Stufe der Encoder-Anordnung zumindest im Wesentlichen so gestaltet sein wie dies in der EP 2 469 239 A1 beschrieben ist.

Die elektronische Auswerteeinrichtung kann dazu ausgebildet sein, aus der Winkelstellung des Winkel-Codeträgers einen ersten Anteil der Umdrehungsanzahl und aus dem relativen Winkelversatz der Nonius-Codeträger einen zweiten Anteil der Umdrehungsanzahl zu ermitteln. Sollte die Encoder-Anordnung noch weitere Stufen (zum Beispiel zwischengeschaltete Stufen bzw. Zwischenstufen) umfassen, können diese jeweilige weitere Anteile der Umdrehungsanzahl liefern. Insbesondere können alle vorgesehenen Multiturnstufen eine Kette bilden, in der jeweils die nachgeordnete Multiturnstufe entsprechend der Getriebeuntersetzung eine höhere Größenordnung der Umdrehungsanzahl bestimmt. Zum Ermitteln der Umdrehungsanzahl der Eingangswelle kann die elektronische Auswerteeinrichtung zum Beispiel einen der Winkelstellung des Winkel-Codeträgers entsprechenden Wert mit einem Übersetzungsverhältnis des ersten Getriebes multiplizieren und zu dem erhaltenen Wert das Produkt aus einem dem Winkelversatz der Nonius-Zahnräder entsprechenden Wert und einer Zähnezahl eines der Nonius-Zahnräder hinzuaddieren. Die elektronische Auswerteeinrichtung kann zusätzlich zu dem so ermittelten Wert für die Umdrehungsanzahl auch die Winkelstellung der Eingangswelle ausgeben.

Vorzugsweise unterscheiden sich die Zähnezahlen der Nonius-Zahnräder um einen Differenzbetrag von höchstens 5, vorzugsweise von 1 oder 2. Dies ergibt eine günstige Ausnutzung des Nonius-Prinzips.

Eine Ausgestaltung der Erfindung sieht vor, dass eines der Nonius-Zahnräder eine Zähnezahl von 16 oder eines Vielfachen von 16 aufweist. In vielen praktischen Fällen ist nämlich jeder Stufe der Encoder-Anordnung ein Vervielfachungsfaktor von 16 zugeordnet.

Die Nonius-Zahnräder können als Stirnräder ausgebildet sein. Dies ergibt eine besonders einfache Konstruktion.

Um Bauraum zu sparen, kann das zweite Getriebe auch ausschließlich durch die Nonius-Zahnräder gebildet sein.

Der erste Sensor der ersten Stufe ist vorzugsweise zum direkten Erfassen der absoluten Winkelstellung des Winkel-Codeträgers ausgebildet. Das heißt der Sensor der ersten Stufe erfasst vorzugsweise ausschließlich die Winkelstellung des Winkel-Codeträgers und berücksichtigt nicht die Winkelstellungen weiterer Codeträger.

Bevorzugt ist das erste Getriebe ein Untersetzungsgetriebe. Dies ermöglicht das Zählen von mehreren aufeinanderfolgenden Umdrehungen der Eingangswelle mittels eines einzigen Winkel-Codeträgers.

Eine Ausführungsform der Erfindung sieht vor, dass das erste Getriebe ein Übersetzungsverhältnis von wenigstens 4, bevorzugt von wenigstens 8 und besonders bevorzugt von 16 aufweist. Das erste Getriebe kann dadurch die Drehzahl so weit verringern, dass die Lebensdauer der Nonius-Zahnräder nicht durch übermäßigen Abrieb verringert wird.

Es kann vorgesehen sein, dass das erste Getriebe mehrstufig ist. Dabei kann eine Eingangsstufe des ersten Getriebes zum Beispiel ein Übersetzungsverhältnis von wenigstens 1,5 und bevorzugt von 2 aufweisen. Eine relativ ausgeprägte Untersetzung bereits in der ersten Getriebestufe, also zum Beispiel an der ersten Zahnradpaarung, reduziert den Verschleiß für alle nachfolgenden Getriebestufen und Encoder-Stufen.

Gemäß einer weiteren Ausführungsform der Erfindung ist vorgesehen, dass die Encoder-Anordnung wenigstens eine weitere Stufe (zum Beispiel eine zwischengeschaltete Stufe bzw. Zwischenstufe) umfasst, wobei ein Winkel-Codeträger der wenigstens einen weiteren Stufe über ein weiteres, dem zweiten Getriebe vorgeschaltetes Getriebe von dem Winkel-Codeträger der ersten Stufe antreibbar ist, wobei ein Sensor der wenigstens einen weiteren Stufe dazu ausgebildet ist, eine Winkelstellung des Winkel-Codeträgers der wenigstens einen weiteren Stufe zu erfassen, und wobei die elektronische Auswerteeinrichtung dazu ausgebildet ist, beim Ermitteln der Umdrehungsanzahl die erfasste Winkelstellung des Winkel-Codeträgers der wenigstens einen weiteren Stufe zu berücksichtigen. Mittels der weiteren Stufe der Encoder-Anordnung kann wie vorstehend ausgeführt ein entsprechender Anteil der Umdrehungsanzahl ermittelt werden. Vorzugsweise sind alle Multiturnstufen der Encoder-Anordnung mit Ausnahme der letzten Multiturnstufe als Untersetzungsstufen mit direkter Winkelablesung am letzten Zahnrad ausgebildet. Es hat sich nämlich herausgestellt, dass es konstruktionsmäßig besonders vorteilhaft ist, ausschließlich in der letzten Multiturnstufe Nonius-Zahnräder vorzusehen.

Vorzugsweise ist die zweite Stufe eine Ausgangsstufe der Encoder-Anordnung. Es ist nämlich hinsichtlich des Verschleißes der Nonius-Zahnräder günstig, wenn diese in der letzten, am langsamsten drehenden Multiturnstufe vorgesehen sind.

Eine spezielle Ausgestaltung der Erfindung sieht vor, dass der Winkel-Codeträger und die Nonius-Codeträger graphische Codemuster aufweisen und der Sensor der ersten Stufe sowie der Sensor der zweiten Stufe optische Sensoren sind. Dies hat sich als besonders zuverlässig erwiesen. Grundsätzlich könnten der Winkel-Codeträger und die Nonius-Codeträger auch zum Beispiel magnetische Codemuster aufweisen, die von entsprechenden magnetischen Sensoren ausgelesen werden. Entsprechende Ausgestaltungen können ebenso für eventuell vorhandene weitere Stufen vorgesehen sein.

Weiterbildungen der Erfindung sind auch den abhängigen Ansprüchen, der Beschreibung sowie den beigefügten Zeichnungen zu entnehmen.

Die Erfindung wird nachfolgend beispielhaft unter Bezugnahme auf die Zeichnungen beschrieben.
- Fig. 1: ist eine schematische Darstellung eines erfindungsgemäßen Multiturn-Drehgebers.
- Fig. 2: zeigt ein Getriebe einer ersten Stufe einer Encoder-Anordnung des in Fig. 1 gezeigten Multiturn-Drehgebers.
- Fig. 3: zeigt ein beispielhaftes Nonius-Getriebe eines erfindungsgemäßen Multiturn-Drehgebers.
- Fig. 4: zeigt ein alternativ gestaltetes Nonius-Getriebe eines erfindungsgemäßen Multiturn-Drehgebers.

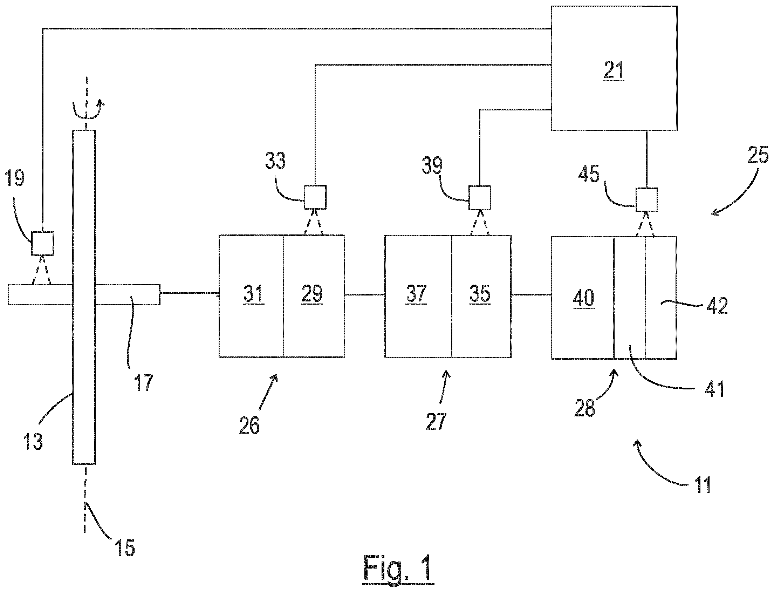

Der in Fig. 1 gezeigte, gemäß einer Ausführungsform der Erfindung gestaltete Multiturn-Drehgeber 11 umfasst eine Eingangswelle 13, die um eine Rotationsachse 15 drehbar in einem nicht dargestellten Gehäuse gelagert ist. Die Eingangswelle 13 ist für eine mechanische Kopplung mit einem drehenden Bauteil vorgesehen, dessen Umdrehungsanzahl ermittelt werden soll. Ein Singleturn-Codeträger 17 ist drehfest mit der Eingangswelle 13 verbunden. Der Singleturn-Codeträger 17 weist eine optische Codierung in Form von hellen und dunklen Bereichen oder ähnlichen Markierungen auf, wie dies grundsätzlich bekannt ist. Ein Singleturn-Sensor 19 ist dazu vorgesehen, anhand der Codierung die Winkelstellung des Singleturn-Codeträgers 17 und somit der Eingangswelle 13 zu erfassen und an eine elektronische Auswerteeinrichtung 21 des Multiturn-Drehgebers 11 auszugeben. Die elektronische Auswerteeinrichtung 21 ist dazu ausgebildet, anhand des Signals des Singleturn-Sensors 19 die Winkelstellung der Eingangswelle 13 zu ermitteln. Der Singleturn-Sensor 19 kann einen Lichtsender und einen Lichtempfänger in reflexiver oder transmissiver Anordnung umfassen. Anstatt auf einem optischen Messprinzip kann die Anordnung aus Singleturn-Codeträger 17 und Singleturn-Sensor 19 auch auf einem magnetischen, induktiven, kapazitiven oder sonstigen Messprinzip beruhen.

Zur Ermittlung der Umdrehungsanzahl der Eingangswelle 13 umfasst der Multi-turn-Drehgeber 11 eine Encoder-Anordnung 25, die eine erste Stufe 26 als Eingangsstufe und eine zweite Stufe 28 als Ausgangsstufe aufweist. Zwischen der ersten Stufe 26 und der zweiten Stufe 28 befindet sich bei dieser Ausführungsform eine Zwischenstufe 27, wobei je nach Anwendung auch mehrere Zwischenstufen vorgesehen sein können.

Die erste Stufe 26 umfasst einen Winkel-Codeträger 29, der über ein erstes Getriebe 31 von der Eingangswelle 13 antreibbar ist. Weiterhin umfasst die erste Stufe 26 einen Multiturn-Sensor 33, der dazu ausgebildet und angeordnet ist, eine Winkelstellung des Winkel-Codeträgers 29 zu erfassen.

Die Zwischenstufe 27 der Encoder-Anordnung 25 umfasst ebenfalls einen Winkel-Codeträger 35. Dieser ist über ein Zwischengetriebe 37 von einem nicht gezeigten Ausgangselement des ersten Getriebes 31 antreibbar. Wie die erste Stufe 26 umfasst auch die Zwischenstufe 27 einen Multiturn-Sensor 39. Dieser ist dazu ausgebildet und angeordnet, eine Winkelstellung des Winkel-Codeträgers 35 der Zwischenstufe 27 zu erfassen.

Wie der Singleturn-Codeträger 17 weisen der Winkel-Codeträger 29 der ersten Stufe 26 und der Winkel-Codeträger 35 der Zwischenstufe 27 jeweils eine optische Codierung in Form von hellen und dunklen Bereichen oder ähnlichen Markierungen auf. Der Multiturn-Sensor 33 der ersten Stufe 26 und der Multiturn-Sensor 39 der Zwischenstufe 27 können wie der Singleturn-Sensor 19 ausgestaltet sein.

Die zweite Stufe 28 der Encoder-Anordnung 25 umfasst ein zweites Getriebe, nämlich ein Nonius-Getriebe 40, dem zwei Nonius-Codeträger 41, 42 zugeordnet sind. Wie in der schematischen Darstellung erkennbar ist das Nonius-Getriebe 40 dem ersten Getriebe 31 und dem Zwischengetriebe 37 nachgeschaltet. Insbesondere kann ein Eingangselement des Nonius-Getriebes 40 von einem nicht gezeigten Ausgangselement des Zwischengetriebes 37 antreibbar sein. Die zweite Stufe 28 umfasst ferner einen Multiturn-Sensor 45, der dazu ausgebildet und angeordnet ist, einen relativen Winkelversatz der Nonius-Codeträger 41, 42 zu erfassen. Der Multiturn-Sensor 33 der ersten Stufe 26, der Multiturn-Sensor 45 der zweiten Stufe 28 und der Multiturn-Sensor 39 der Zwischenstufe stehen ebenso wie der Singleturn-Sensor 19 in Signalverbindung mit der elektronischen Auswerteeinrichtung 21. Die Nonius-Codeträger 41, 42 können jeweilige optische Codierungen aufweisen, deren relative Anordnung einen Winkelversatz angibt, wie nachfolgend genauer ausgeführt wird.

Bei dem ersten Getriebe 31 und dem Zwischengetriebe 37 handelt es sich vorzugsweise um mehrstufige Untersetzungsgetriebe, die jeweils ein Übersetzungsverhältnis von sechzehn aufweisen. Bevorzugt beträgt das Übersetzungsverhältnis einer nicht dargestellten Eingangsstufe des ersten Getriebes 31 zwei. Der Winkel-Codeträger 29 der ersten Stufe 26 und der Winkel-Codeträger 35 der Zwischenstufe 27 können drehfest mit jeweiligen Ausgangselementen des ersten Getriebes 31 und des Zwischengetriebes 37 verbunden oder direkt auf die Ausgangselemente aufgebracht sein.

Die drei Stufen 26, 27, 28 der Encoder-Anordnung 25 bestimmen jeweilige Vielfache der Umdrehungsanzahl der Eingangswelle 13. Speziell sind die erste Stufe 26, die zweite Stufe 28 und die Zwischenstufe 27 Multiturnstufen, die eine Kette bilden, in der jeweils die nachgeordnete Multiturnstufe eine höhere Größenordnung der Umdrehungsanzahl der Eingangswelle 13 bestimmt. Diese Kette kann weitere, in Fig. 1 nicht dargestellte Multiturnstufen umfassen.

Die elektronische Auswerteeinrichtung 21 verarbeitet Signale der Sensoren 19, 33, 39, 45 und erfüllt Steuerungsaufgaben des Multiturn-Drehgebers 11. Bevorzugt weist sie einen elektronischen Umdrehungszähler und einen nichtflüchtigen Datenspeicher auf. Speziell empfängt die elektronische Auswerteeinrichtung 21 Sensorsignale von dem Multiturn-Sensor 33 der ersten Stufe 26, dem Multiturn-Sensor 45 der zweiten Stufe 28 und dem Multiturn-Sensor 39 der Zwischenstufe 27 und erzeugt anhand der Sensorsignale in grundsätzlich bekannter Weise ein Umdrehungsanzahlsignal.

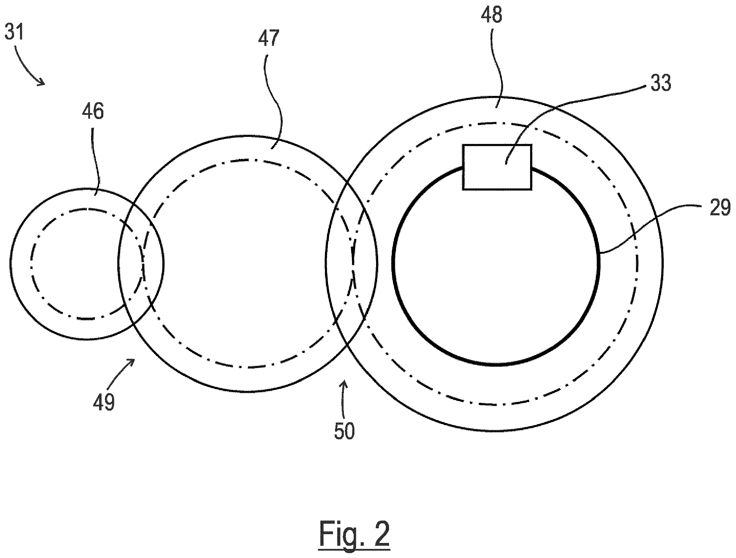

Fig. 2 zeigt eine beispielhafte Ausführungsform des Getriebes 31 der ersten Stufe 26. Gemäß diesem Ausführungsbeispiel ist das erste Getriebe 31 als Stirnradgetriebe ausgeführt und weist drei Untersetzungs-Zahnräder 46, 47, 48 und zwei Getriebestufen 49, 50 auf. Der Winkel-Codeträger 29 der ersten Stufe 26 ist drehfest mit dem im Bild rechten, ausgangsseitigen Untersetzungs-Zahnrad 48 des ersten Getriebes 31 verbunden.

Das Zwischengetriebe 37 ist vorzugsweise ebenfalls wie in Fig. 2 dargestellt gestaltet. Insbesondere können die erste Stufe 26 und die Zwischenstufe 27 der Encoder-Anordnung 25 so gestaltet sein, wie die in der EP 2 469 239 A1 offenbarten Multiturnstufen. Ein Minimum von drei Untersetzungs-Zahnrädern 46, 47, 48 wird üblicherweise benötigt, um ein Übersetzungsverhältnis von 16:1 realisieren zu können.

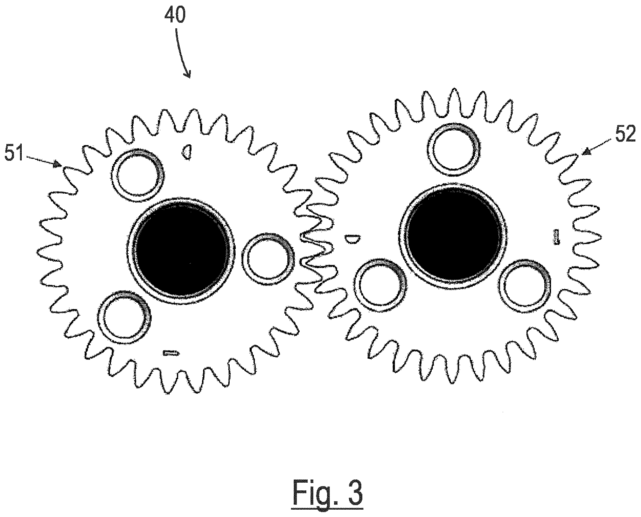

Fig. 3 zeigt eine erste beispielhafte Ausgestaltung des Nonius-Getriebes 40. Das gezeigte Nonius-Getriebe 40 umfasst zwei ineinandergreifende Nonius-Zahnräder 51, 52, deren Zähnezahlen sich um einen Differenzbetrag von 2 unterscheiden. Speziell weist das im Bild linke, eingangsseitige Nonius-Zahnrad 51 dreißig Zähne auf und das im Bild rechte, ausgangsseitige Nonius-Zahnrad 52 weist zweiunddreißig Zähne auf. Dies entspricht einem Zähnezahlverhältnis von 15:16. Die in Fig. 2 schematisch dargestellten und in Fig. 3 nicht sichtbaren Nonius-Codeträger 41, 42 stehen in jeweiliger drehfester Verbindung mit den Nonius-Zahnrädern 51, 52 oder sind einstückig mit diesen ausgeführt. Die Nonius-Codeträger 41, 42 können ein periodisches Muster und/oder eine Kennzeichnung der Zähne umfassen.

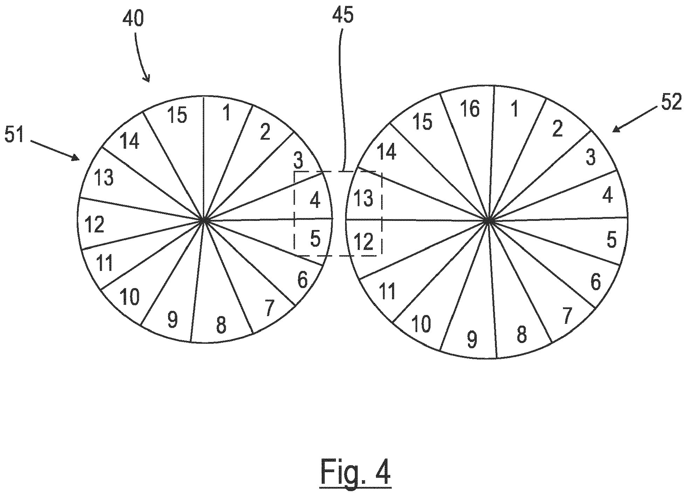

Fig. 4 zeigt eine weitere beispielhafte Ausgestaltung des Nonius-Getriebes 40, wobei hier das im Bild linke, eingangsseitige Nonius-Zahnrad 51 fünfzehn Zähne und das im Bild rechte, ausgangsseitige Nonius-Zahnrad 52 sechzehn Zähne aufweist. Wenn das eingangsseitige Nonius-Zahnrad 51 um 360° gedreht wird, so wird es um fünfzehn Zähne weitergedreht. Das ausgangsseitige Nonius-Zahnrad 52 dreht bei jeder Umdrehung des eingangsseitigen Nonius-Zahnrads 51 um einen Zahn weniger. Wenn das eingangsseitige Nonius-Zahnrad 51 siebzehn Umdrehungen ausgeführt hat und das zweite Nonius-Zahnrad 52 sechzehn Umdrehungen ausgeführt hat, befinden sich die Nonius-Zahnräder 51, 52 wieder im Ausgangszustand.

Anhand des aktuellen Winkelversatzes der Nonius-Codeträger 41, 42 kann die Anzahl der vom eingangsseitigen Nonius-Zahnrad 51 ausgeführten Umdrehungen erkannt werden. Der Multiturn-Sensor 45 der zweiten Stufe 28 ist demgemäß dazu ausgebildet, die ausgelesenen Werte der beiden Nonius-Zahnräder 51, 52 miteinander zu vergleichen. Die absolute Winkelstellung der Nonius-Zahnräder 51, 52 muss hierfür nicht erfasst werden. Um ein Übersetzungsverhältnis von sechzehn zu realisieren, ist es erforderlich, dass das eingangsseitige Nonius-Zahnrad 51 oder das ausgangsseitige Nonius-Zahnrad 52 sechzehn Zähne oder ein Vielfaches davon aufweist. Das andere Nonius-Zahnrad 51, 52 weist vorzugsweise einen Zahn mehr oder einen Zahn weniger auf.

Dadurch, dass lediglich die letzte Stufe 28 der Encoder-Anordnung 25 ein Nonius-Getriebe 40 umfasst, während die beiden vorausgehenden Stufen 26, 27 als klassische Multiturn-Stufen mit Untersetzungsgetriebe ausgeführt sind, drehen sich die Nonius-Zahnräder 50, 51 nur langsam, so dass keine Probleme wegen übermäßigem Abrieb der Nonius-Zahnräder 51, 52 zu befürchten sind. Die Ausführung der zweiten Stufe 28 mit Nonius-Getriebe 40 ermöglicht eine Einsparung von Zahnrädern, die nicht nur hinsichtlich der Herstellungskosten und des Bauvolumens günstig ist, sondern insbesondere auch eine schnellere Ermittlung des Gesamtgetriebespiels ermöglicht. Es hat sich gezeigt, dass mit einem erfindungsgemäßen Multiturn-Drehgeber gegebenenfalls Synchronisationszeiten im Bereich weniger Sekunden möglich sind.

### Bezugszeichenliste

- 11: Multiturn-Drehgeber
- 13: Eingangswelle
- 15: Rotationsachse
- 17: Singleturn-Codeträger
- 19: Singleturn-Sensor
- 21: elektronische Auswerteeinrichtung
- 25: Encoder-Anordnung
- 26: erste Stufe
- 27: Zwischenstufe
- 28: zweite Stufe
- 29: Winkel-Codeträger der ersten Stufe
- 31: erstes Getriebe
- 33: Multiturn-Sensor der ersten Stufe
- 35: Winkel-Codeträger der Zwischenstufe
- 37: Zwischengetriebe
- 39: Multiturn-Sensor der Zwischenstufe
- 40: Nonius-Getriebe
- 41: erster Nonius-Codeträger
- 42: zweiter Nonius-Codeträger
- 45: Multiturn-Sensor der zweiten Stufe
- 46: Untersetzungs-Zahnrad
- 47: Untersetzungs-Zahnrad
- 48: Untersetzungs-Zahnrad
- 49: Getriebestufe
- 50: Getriebestufe
- 51: erstes Nonius-Zahnrad
- 52: zweites Nonius-Zahnrad

## Patentansprüche

1. Multiturn-Drehgeber (11) mit einer drehbaren Eingangswelle (13) und einer mehrstufigen Encoder-Anordnung (25) zum Erzeugen eines Umdrehungsanzahl-Signals,
wobei eine erste Stufe (26) der Encoder-Anordnung (25) einen Winkel-Codeträger (29) umfasst, der über ein erstes Getriebe (31) von der drehbaren Eingangswelle (13) antreibbar ist, wobei ein Sensor (33) der ersten Stufe (26) dazu ausgebildet ist, eine Winkelstellung des Winkel-Codeträgers (29) zu erfassen,
**dadurch gekennzeichnet, dass**
eine zweite Stufe (28) der Encoder-Anordnung (25) ein dem ersten Getriebe (31) nachgeschaltetes zweites Getriebe (40) umfasst, das zwei ineinandergreifende Nonius-Zahnräder (51, 52) aufweist, deren Zähnezahlen sich um einen Differenzbetrag unterscheiden und die mit jeweiligen Nonius-Codeträgern (41, 42) versehen sind, wobei ein Sensor (45) der zweiten Stufe (28) dazu ausgebildet ist, einen relativen Winkelversatz der Nonius-Codeträger (41, 42) zu erfassen,
und wobei eine elektronische Auswerteeinrichtung (21) der Encoder-Anordnung (25) dazu ausgebildet ist, unter Berücksichtigung der erfassten Winkelstellung des Winkel-Codeträgers (29) und des erfassten relativen Winkelversatzes der Nonius-Codeträger (41, 42) eine Umdrehungsanzahl der Eingangswelle (13) zu ermitteln.

2. Multiturn-Drehgeber nach Anspruch 1,
wobei sich die Zähnezahlen der Nonius-Zahnräder (51, 52) um einen Differenzbetrag von höchstens fünf, vorzugsweise von eins oder zwei, unterscheiden.

3. Multiturn-Drehgeber nach Anspruch 1 oder 2,
wobei eines der Nonius-Zahnräder (51, 52) eine Zähnezahl von 16 oder eines Vielfachen von 16 aufweist.

4. Multiturn-Drehgeber nach einem der vorstehenden Ansprüche,
wobei die Nonius-Zahnräder (51, 52) als Stirnräder ausgebildet sind.

5. Multiturn-Drehgeber nach einem der vorstehenden Ansprüche,
wobei das zweite Getriebe (40) ausschließlich durch die Nonius-Zahnräder (51, 52) gebildet ist.

6. Multiturn-Drehgeber nach einem der vorstehenden Ansprüche,
wobei der Sensor (33) der ersten Stufe (26) zum direkten Erfassen der absoluten Winkelstellung des Winkel-Codeträgers (29) ausgebildet ist.

7. Multiturn-Drehgeber nach einem der vorstehenden Ansprüche, wobei das erste Getriebe (31) ein Untersetzungsgetriebe ist.

8. Multiturn-Drehgeber nach Anspruch 7,
wobei das erste Getriebe (31) ein Übersetzungsverhältnis von wenigstens 4, bevorzugt von wenigstens 8 und besonders bevorzugt von 16 aufweist.

9. Multiturn-Drehgeber nach Anspruch 7 oder 8, wobei das erste Getriebe (31) mehrstufig ist.

10. Multiturn-Drehgeber nach Anspruch 9,
wobei eine Eingangsstufe (49) des ersten Getriebes (31) ein Übersetzungsverhältnis von wenigstens 1,5 und bevorzugt von 2 aufweist.

11. Multiturn-Drehgeber nach einem der vorstehenden Ansprüche,
wobei die Encoder-Anordnung (25) wenigstens eine weitere Stufe (27) umfasst, wobei ein Winkel-Codeträger (35) der wenigstens einen weiteren Stufe (27) über ein weiteres, dem zweiten Getriebe (40) vorgeschaltetes Getriebe (37) von dem Winkel-Codeträger (29) der ersten Stufe (26) antreibbar ist, wobei ein Sensor (39) der wenigstens einen weiteren Stufe (27) dazu ausgebildet ist, eine Winkelstellung des Winkel-Codeträgers (35) der wenigstens einen weiteren Stufe (27) zu erfassen, und wobei die elektronische Auswerteeinrichtung (21) dazu ausgebildet ist, beim Ermitteln der Umdrehungsanzahl die erfasste Winkelstellung des Winkel-Codeträgers (35) der wenigstens einen weiteren Stufe (27) zu berücksichtigen.

12. Multiturn-Drehgeber nach einem der vorstehenden Ansprüche,
wobei die zweite Stufe (28) eine Ausgangsstufe der Encoder-Anordnung (25) ist.

13. Multiturn-Drehgeber nach einem der vorstehenden Ansprüche,
wobei der Winkel-Codeträger (29) und die Nonius-Codeträger (41, 42) graphische Codemuster aufweisen und der Sensor (33) der ersten Stufe (26) sowie der Sensor (45) der zweiten Stufe (28) optische Sensoren sind.

## Claims

1. A multi-turn rotary encoder (11) comprising a rotatable input shaft (13) and a multistage encoder arrangement (25) for generating a number-of-revolutions signal,
wherein a first stage (26) of the encoder arrangement (25) comprises an angular code carrier (29) which can be driven by the rotatable input shaft (13) via a first gear unit (31), wherein a sensor (33) of the first stage (26) is configured to detect an angular position of the angular code carrier (29),
**characterized in that**
a second stage (28) of the encoder arrangement (25) comprises a second gear unit (40) which is connected downstream of the first gear unit (31) and which has two vernier gears (51, 52) which engage into one another, whose numbers of teeth differ by a difference amount and which are provided with respective vernier code carriers (41, 42), with a sensor (45) of the second stage (28) being configured to detect a relative angular offset of the vernier code carriers (41, 42),
and wherein an electronic evaluation device (21) of the encoder arrangement (25) is configured to determine a number of revolutions of the input shaft (13) while considering the detected angular position of the angular code carrier (29) and the detected relative angular offset of the vernier code carriers (41, 42).

2. A multi-turn rotary encoder in accordance with claim 1,
wherein the numbers of teeth of the vernier gears (51, 52) differ by a difference amount of at most five, preferably of one or two.

3. A multi-turn rotary encoder in accordance with claim 1 or 2,
wherein one of the vernier gears (51, 52) has a number of teeth of 16 or a multiple of 16.

4. A multi-turn rotary encoder in accordance with any one of the preceding claims,
wherein the vernier gears (51, 52) are configured as spur gears.

5. A multi-turn rotary encoder in accordance with any one of the preceding claims,
wherein the second gear unit (40) is formed exclusively by the vernier gears (51, 52).

6. A multi-turn rotary encoder in accordance with any one of the preceding claims,
wherein the sensor (33) of the first stage (26) is configured to directly detect the absolute angular position of the angular code carrier (29).

7. A multi-turn rotary encoder in accordance with any one of the preceding claims,
wherein the first gear unit (31) is a reduction gear unit.

8. A multi-turn rotary encoder in accordance with claim 7,
wherein the first gear unit (31) has a transmission ratio of at least 4, preferably of at least 8, and particularly preferably of 16.

9. A multi-turn rotary encoder in accordance with claim 7 or 8,
wherein the first gear unit (31) is a multistage gear.

10. A multi-turn rotary encoder in accordance with claim 9,
wherein an input stage (49) of the first gear unit (31) has a transmission ratio of at least 1.5 and preferably of 2.

11. A multi-turn rotary encoder in accordance with any one of the preceding claims,
wherein the encoder arrangement (25) comprises at least one further stage (27), wherein an angular code carrier (35) of the at least one further stage (27) can be driven by the angular code carrier (29) of the first stage (26) via a further gear unit (37) connected upstream of the second gear unit (40),
wherein a sensor (39) of the at least one further stage (27) is configured to detect an angular position of the angular code carrier (35) of the at least one further stage (27), and wherein the electronic evaluation device (21) is configured to consider the detected angular position of the angular code carrier (35) of the at least one further stage (27) when determining the number of revolutions.

12. A multi-turn rotary encoder in accordance with any one of the preceding claims,
wherein the second stage (28) is an output stage of the encoder arrangement (25).

13. A multi-turn rotary encoder in accordance with any one of the preceding claims,
wherein the angular code carrier (29) and the vernier code carriers (41, 42) have graphic code patterns and the sensor (33) of the first stage (26) and the sensor (45) of the second stage (28) are optical sensors.

## Revendications

1. Codeur rotatif multitours (11) comprenant un arbre d'entrée rotatif (13) et un ensemble encodeur à plusieurs étages (25) pour générer un signal de nombre de tours,
un premier étage (26) de l'ensemble encodeur (25) comprenant un support de code angulaire (29) qui peut être entraîné par l'arbre d'entrée rotatif (13) par l'intermédiaire d'un premier engrenage (31), un capteur (33) du premier étage (26) étant conçu pour détecter une position angulaire du support de code angulaire (29),
**caractérisé en ce que**
un deuxième étage (28) de l'ensemble encodeur (25) comprend un deuxième engrenage (40) monté en aval du premier engrenage (31), qui présente deux roues dentées de vernier (51, 52) s'engrenant l'une dans l'autre, dont les nombres de dents diffèrent d'une valeur différentielle et qui sont pourvues de supports de code de vernier respectifs (41, 42), un capteur (45) du deuxième étage (28) étant conçu pour détecter un décalage angulaire relatif des supports de code de vernier (41, 42),
et un dispositif d'évaluation électronique (21) de l'ensemble encodeur (25) est conçu pour déterminer un nombre de tours de l'arbre d'entrée (13) en tenant compte de la position angulaire détectée du support de code angulaire (29) et du décalage angulaire relatif détecté des supports de code vernier (41, 42).

2. Codeur rotatif multitours selon la revendication 1,
dans lequel les nombres de dents des roues dentées de vernier (51, 52) diffèrent d'une valeur différentielle de cinq au maximum, de préférence de un ou deux.

3. Codeur rotatif multitours selon la revendication 1 ou 2,
dans lequel l'une des roues dentées de vernier (51, 52) présente un nombre de dents égal à 16 ou à un multiple de 16.

4. Codeur rotatif multitours selon l'une des revendications précédentes,
dans lequel les roues dentées de vernier (51, 52) sont réalisées sous forme de roues dentées droites.

5. Codeur rotatif multitours selon l'une des revendications précédentes,
dans lequel le deuxième engrenage (40) est formé exclusivement par les roues dentées de vernier (51, 52).

6. Codeur rotatif multitours selon l'une des revendications précédentes,
dans lequel le capteur (33) du premier étage (26) est conçu pour détecter directement la position angulaire absolue du support de code angulaire (29).

7. Codeur rotatif multitours selon l'une des revendications précédentes, dans lequel le premier engrenage (31) est un démultiplicateur.

8. Codeur rotatif multitours selon la revendication 7,
dans lequel le premier engrenage (31) présente un rapport de transmission d'au moins 4, de préférence d'au moins 8 et de manière particulièrement préférée de 16.

9. Codeur rotatif multitours selon la revendication 7 ou 8,
dans lequel le premier engrenage (31) est à plusieurs étages.

10. Codeur rotatif multitours selon la revendication 9, dans lequel un étage d'entrée (49) du premier engrenage (31) présente un rapport de transmission d'au moins 1,5 et de préférence de 2.

11. Codeur rotatif multitours selon l'une des revendications précédentes,
dans lequel l'ensemble encodeur (25) comprend au moins un autre étage (27),
un support de code angulaire (35) dudit au moins un autre étage (27) peut être entraîné par le support de code angulaire (29) du premier étage (26) par l'intermédiaire d'un autre engrenage (37) monté en amont du deuxième engrenage (40),
un capteur (39) dudit au moins un autre étage (27) est conçu pour détecter une position angulaire du support de code angulaire (35) dudit au moins un autre étage (27), et
le dispositif d'évaluation électronique (21) est conçu pour tenir compte de la position angulaire détectée du support de code angulaire (35) dudit au moins un autre étage (27) lors de la détermination du nombre de tours.

12. Codeur rotatif multitours selon l'une des revendications précédentes,
dans lequel le deuxième étage (28) est un étage de sortie de l'ensemble encodeur (25).

13. Codeur rotatif multitours selon l'une des revendications précédentes,
dans lequel le support de code angulaire (29) et les supports de code de vernier (41, 42) présentent des motifs de code graphiques, et le capteur (33) du premier étage (26) ainsi que le capteur (45) du deuxième étage (28) sont des capteurs optiques.
